# EUROPEAN PATENT APPLICATION

(11) **EP 2 518 982 A1**
(43) Date of publication of application: **31.10.2012**
(21) Application number: 11290204.4
(22) Date of filing: 28.04.2011
(51) Int. Cl.: H04M 1/725, H04B 5/00

(54) **Mobile device, transponder, near field communication system and method for configuring a mobile device**

(71) Applicant: NXP B.V., 5656 AG Eindhoven (NL)
(72) Inventor: Geslin, Jérémy, 5656 AG Eindhoven (NL); Maréchal, David, Colombelles (FR)
(74) Representative: Krott, Michel

(57) **Abstract**

According to an aspect of the invention a mobile device is provided comprising a communication unit for communicating with a transponder, a configuration unit for configuring the mobile device, wherein the configuration unit is arranged to retrieve configuration data from the transponder, and wherein the configuration unit is arranged to configure the mobile device based on the configuration data. Furthermore, a corresponding transponder, near field communication system and method for configuring a mobile device are provided.

## Description

### FIELD OF THE INVENTION

The invention relates to a mobile device, a transponder for communicating with the mobile device, a near field communication system comprising the mobile device and the transponder, and a method for configuring the mobile device.

### BACKGROUND OF THE INVENTION

In recent years, near field communication (NFC) technology has become very popular in the area of consumer electronics. In particular, mobile devices such as high-end mobile phones have often been equipped with NFC devices which enable near field communication. Near field communication refers to a set of short-range wireless technologies, typically requiring a distance in the order of magnitude of centimeters. NFC operates at a frequency of 13.56 MHz and at data rates ranging from 106 kbit/s to 848 kbit/s or higher.

Near field communication involves an initiator and a target; the initiator actively generates an RF field that can power a passive target. The passive target does not need to be equipped with a power source. This enables NFC targets to take very simple form factors such as tags, stickers, key fobs, or cards that do not require batteries. However, NFC peer-to-peer communication is also possible, meaning that the communication takes place between NFC devices that are powered by their own power source.

A fully equipped NFC device offers different operating modes which are the following:
- *ReaderlWriter Mode:* when operating in this mode, the NFC device can read and alter data stored in NFC-compliant passive targets. These passive targets do not need to have their own power source. Such targets can be found, for example, on smart posters, allowing the user to retrieve additional information by reading the target with the NFC device. Depending on the data stored on the target, the NFC device takes an appropriate action without any user interaction. If a Uniform Resource Identifier (URI) is found on the target, the handset will open a web browser, for example.
- *Card Emulation Mode*: an NFC device can also act as smartcard (ISO 14443) after having been switched into card emulation mode. In this case an external reader cannot distinguish the NFC device from a smartcard. This mode is useful for contactless payment and ticketing applications, for example. Actually, an NFC-enabled handset is capable of storing different contactless smartcard applications in one device.
- *Peer-to-Peer Mode*: the NFC peer-to-peer mode (ISO 18092) allows two NFC-enabled devices to establish a bidirectional connection to exchange contacts, Bluetooth pairing information or any other kind of data. Cumbersome pairing processes are a thing of the past thanks to NFC technology. In order to establish a connection a client (NFC peer-to-peer initiator) searches for a host (NFC peer-to-peer target) and sets up a connection. Then the NDEF (NFC Data Exchange Format) is used to transmit the data.

In general, NFC transponders can contain data for a variety of application areas, ranging from public transportation, e-government, pay TV, smart building environments and many others. NFC transponders may comprise both active tags, which contain their own power source, and passive tags, which do not contain a power source and are relatively cheap.

Mobile devices such as smart phones are often equipped with NFC devices which enable near field communication with an external NFC transponder. For example, an NFC-enabled smart phone may communicate with an NFC transponder embedded in a smart poster in order to retrieve an internet address pointing to a website which offers a free, downloadable voucher. A smart phone typically contains a relatively large number of software applications for various purposes, i.e. applications which are specific to the above-mentioned application areas or other application areas. Unfortunately, selecting and configuring these applications has become a burdensome and complex task for the user.

### SUMMARY OF THE INVENTION

It is an object of the invention to simplify the use of mobile devices of the kind set forth. This is achieved by a mobile device according to claim 1, a transponder according to claim 6, a near field communication system according to claim 10 and a method for configuring a mobile device according to claim 11.

According to an aspect of the invention a mobile device is provided comprising a communication unit for communicating with a transponder, a configuration unit for configuring the mobile device, wherein the configuration unit is arranged to retrieve configuration data from the transponder, and wherein the configuration unit is arranged to configure the mobile device based on the configuration data.

According to another aspect of the invention the mobile device further comprises a memory unit, and the configuration unit is arranged to configure the mobile device by launching an application stored in the memory unit.

According to a further aspect of the invention the application comprises a set of user preferences, and the configuration unit is further arranged to configure the user preferences based on the configuration data.

According to a further aspect of the invention the communication unit is a near field communication unit.

According to a further aspect of the invention the configuration unit is arranged to configure the mobile device automatically based on the configuration data.

According to another aspect of the invention a transponder is provided for communicating with a mobile device, the transponder comprising configuration data for configuring the mobile device according to the invention.

According to a further aspect of the invention the configuration data comprises trigger data for triggering the launching of an application stored in a memory unit of the mobile device.

According to a further aspect of the invention the configuration data further comprises user preference data for configuring user preferences of the application.

According to a further aspect of the invention the transponder is a near field communication transponder.

According to another aspect of the invention a near field communication system is provided comprising a mobile device and a transponder of the kind set forth.

According to another aspect of the invention a method is provided for configuring a mobile device, the mobile device comprising a communication unit for communicating with a transponder, a configuration unit for configuring the mobile device, wherein the configuration unit retrieves configuration data from the transponder, and wherein the configuration unit configures the mobile device based on the configuration data.

### BRIEF DESCRIPTION OF THE DRAWINGS

The invention will be described in more detail with reference to the appended drawings, in which:

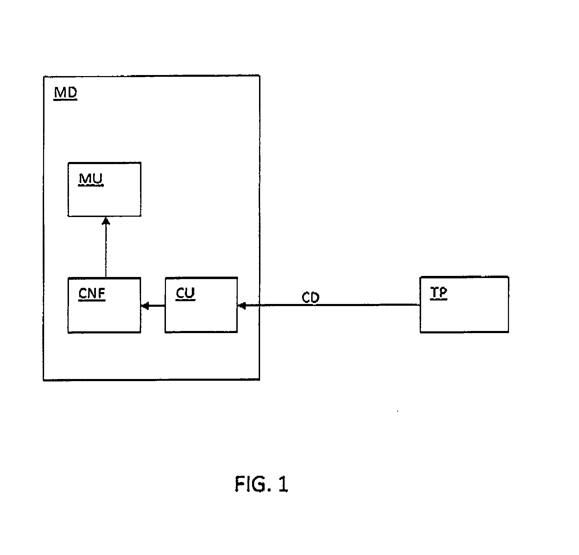

Fig. 1 shows an exemplary embodiment of a near field communication system according to the invention.

### DESCRIPTION OF PREFERRED EMBODIMENTS

Fig. 1 shows an exemplary embodiment of a near field communication system according to the invention. The near field communication system comprises a mobile device MD which communicates with a transponder TP. The mobile device MD typically comprises a number of applications from a variety of application areas. For example, it comprises an application that allows a user to use the mobile device as a remote control for a television and a GPS-navigation application for use in a vehicle. The increasing number of such applications complicates the task of selecting and configuring the applications via the graphical user interface of the mobile device. The invention simplifies this task in the following way.

The mobile device MD comprises a configuration unit CNF which receives, via a communication unit CU, configuration data CD from a localized transponder TP. These configuration data CD are specific to a certain application. The configuration unit CNF is arranged to trigger (for example by means of a software application dedicated to this purpose) the launching of the specific application.

For example, the user will place NFC transponders at various places, such as home, car and workplace. The desired behavior of the mobile device, in particular which application should be launched and what the settings of the application should be, can be preconfigured by the user and paired with a specific NFC transponder via a simple touch. When the user arrives at one of said places he will present the mobile device to the transponder and the mobile device will autonomously launch the associated application. The launching may be done fully automatically or after a confirmation action by the user, for example. It will be appreciated that more than one application may be launched in response to the configuration data CD provided by the transponder TP.

More specifically, a user who arrives at home can touch a transponder TP with his mobile device MD in order to launch a remote control application for the television. The transponder TP transmits configuration data CD to the mobile device MD which trigger the launching of the remote control application stored in the memory unit MU of the mobile device MD. The mobile device MD automatically launches the remote control application so that the user may immediately use it as a remote control device for his television. Optionally, the configuration data CD comprise user preference data which are used to configure the user preferences or settings of the application. For example, a passive transponder could be installed at home for each family member, and the user preference data contains a preferred channel list for the television.

In another example, a user who arrives at his car touches a transponder TP mounted in the car in order to launch a GPS-navigation application. The transponder TP transmits configuration data CD to the mobile device MD which trigger the launching of the GPS-navigation application stored in the memory unit MU of the mobile device MD. The mobile device MD automatically launches the GPS-navigation application so that the mobile device MD may be used for navigational purposes. Optionally, the configuration data CD comprise user preference data, in particular a predetermined destination such as the home address of the user. In this case the user can accept the predetermined destination by confirming it without having to program the home address manually.

In yet another example, a user who enters a plane touches a transponder TP mounted near the boarding gate in order to step all GSM communications automatically. The transponder TP transmits configuration data CD to the mobile device MD which disable the GSM communication module of the mobile device MD.

In yet another example, a user who arrives at a cinema touches a transponder TP mounted at the entrance in order to enter a silent mode. The transponder TP transmits configuration data CD to the mobile device MD which trigger the mobile device MD to enter into the silent mode.

The above-mentioned preferred embodiments illustrate rather than limit the invention, and the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. The invention may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SYMBOLS

- MD: mobile device
- MU: memory unit
- CNF: configuration unit
- CU: communication unit
- CD: configuration data
- TP: transponder

## Claims

1. A mobile device (MD) comprising:
- a communication unit (CU) for communicating with a transponder (TP),
- a configuration unit (CNF) for configuring the mobile device (MD),
wherein the configuration unit (CNF) is arranged to retrieve configuration data (CD) from the transponder (TP),
and wherein the configuration unit (CNF) is arranged to configure the mobile device (MD) based on the configuration data (CD).

2. A mobile device (MD) as claimed in claim 1,
- the mobile device (MD) further comprising a memory unit (MU),
wherein the configuration unit (CNF) is arranged to configure the mobile device (MD) by launching an application stored in the memory unit (MU).

3. A mobile device (MD) as claimed in claim 2, wherein the application comprises a set of user preferences, and wherein the configuration unit (CNF) is further arranged to configure the user preferences based on the configuration data (CD).

4. A mobile device (MD) as claimed in claim 1,
wherein the communication unit (CU) is a near field communication unit.

5. A mobile device as claimed in claim 1,
wherein the configuration unit (CNF) is arranged to configure the mobile device (MD) automatically based on the configuration data (CD).

6. A transponder (TP) for communicating with a mobile device (MD) as claimed in claim 1,
the transponder (TP) comprising configuration data (CD) for configuring the mobile device (MD).

7. A transponder (TP) as claimed in claim 6,
wherein the configuration data (CD) comprises trigger data for triggering the launching of an application stored in a memory unit (MU) of the mobile device (MD).

8. A transponder (TP) as claimed in claim 7,
wherein the configuration data (CD) further comprises user preference data for configuring user preferences of the application.

9. A transponder (TP) as claimed in claim 6,
wherein the transponder (TP) is a near field communication transponder.

10. A near field communication system comprising a mobile device (MD) as claimed in claim 1 and a transponder (TP) as claimed in claim 6.

11. A method for configuring a mobile device (MD),
the mobile device (MD) comprising:
- a communication unit (CU) for communicating with a transponder (TP),
- a configuration unit (CNF) for configuring the mobile device (MD),
wherein the configuration unit (CU) retrieves configuration data (CD) from the transponder (TP),
and wherein the configuration unit (CU) configures the mobile device (MD) based on the configuration data (CD).
